# FASCICULE DE BREVET EUROPEEN

(11) **EP 2 020 891 B1**
(45) Date de publication et mention de la délivrance du brevet: **26.08.2009**
(21) Numéro de dépôt: 07729096.3
(22) Date de dépôt: 14.05.2007
(51) Int. Cl.: A47J 31/40, A47J 31/06

(54) **MACHINE POUR LA FABRICATION DE CAFES DE TYPE ESPRESSO**
MASCHINE ZUR ZUBEREITUNG VON ESPRESSOARTIGEM KAFFEE
MACHINE FOR PRODUCING ESPRESSO-TYPE COFFEE

(30) Priorité: 31.05.2006 FR 0651981
(43) Date de publication de la demande: 11.02.2009
(73) Titulaire: UNIC S.A.S., 06510 Carros (FR)
(72) Inventeur: LEVI, Jean-Pierre, 06000 Nice (FR); LEVI, Mario, 06000 Nice (FR)
(74) Mandataire: Decobert, Jean-Pascal
(86) Numéro de dépôt international: PCT/EP2007/054644
(87) Numéro de publication internationale: WO 2007/137937

(56) Documents cités:
- FR-A1- 2 849 760

## Description

La présente invention concerne un dispositif d'extraction d'une substance pour la production de boissons par infusion et en particulier de boissons au café à partir de mouture.

L'invention s'appliquera particulièrement aux machines à café de type espresso utilisant des conditionnements de mouture de café du type cartouche ou capsule.

Améliorer la praticité d'emploi des machines à café est un souci constant de tous les fabricants et ce plus particulièrement depuis l'apparition de conditionnements jetables de mouture qui sont faciles à manipuler.

Différents systèmes permettant d'opérer les phases d'introduction de la mouture, de fermeture de la chambre d'infusion, d'opération de la lixiviation, d'ouverture de la chambre d'infusion et de l'éjection de la mouture, ont déjà été proposés.

Le document FRA 2 849 760 présente dans ce cadre un dispositif et une machine pour l'extraction d'une substance pour la production de boissons comportant des chambres d'infusion aptes à être ouvertes et fermées par l'intermédiaire d'un système à levier monté en rotation par rapport au bâti de la machine de sorte à entraîner, suivant un autre axe de rotation, une partie mobile de la chambre d'infusion.

Un tel système d'actionnement donne globalement satisfaction mais il est apparu le besoin de l'améliorer notamment pour des applications à des conditionnements de café moulu de type cartouche ou capsule.

La présente invention s'inscrit dans ce cadre et propose à cet effet un dispositif d'extraction d'une substance pour la production de boisson par infusion associant une mobilité en rotation à une mobilité en translation d'une partie mobile de la chambre d'infusion relativement à une partie fixe. Le tout est combiné à un système d'entraînement à levier disposant d'une liaison du type pivot glissant entre le levier et la partie mobile avantageusement mais non limitativement réalisé par l'intermédiaire d'un système d'axe pivotant et de trous oblongs.

Un tel dispositif a l'avantage d'assurer un grand débattement vertical de la partie mobile pour accéder facilement à son volume intérieur permettant la réception de la mouture, par exemple conditionnée dans des capsules ou cartouches. Ce débattement vertical permet aussi un plus grand débattement angulaire de la partie mobile de sorte à la mettre dans une orientation angulaire favorable pour son extraction manuelle ou pour son éjection automatique.

De par le mode d'entraînement de l'invention, l'ensemble le de ces étapes s'effectue par un seul mouvement de l'utilisateur sur un levier, les moyens d'entraînement utilisés permettant l'enchaînement des phases de mobilité de la partie mobile de la chambre d'infusion.

D'autres buts et avantages apparaîtront au cours de la description qui suit qui présente un mode de réalisation préféré de l'invention non limitatif.

Auparavant, il est rappelé que l'invention concerne un dispositif d'extraction d'une substance pour la production de boissons par infusion comportant :
- une chambre d'infusion formée d'une partie fixe et d'une partie mobile de sorte à ouvrir et fermer la chambre d'infusion,
- un levier monté en rotation relativement à un axe (A) et apte à entraîner la partie mobile en rotation relativement à un axe (B) par l'intermédiaire d'une liaison du type pivot glissant entre le levier et la partie mobile,
caractérisé par le fait que l'axe (B) de rotation de la partie mobile est situé sur un élément monté en translation relativement à la partie fixe pour approcher ou éloigner la partie mobile de la partie fixe.

Ce dispositif pourra se présenter suivant les variantes avantageuses mais non limitatives suivantes :
- dispositif comportant des moyens élastiques de poussée de l'élément monté en translation vers une position dans laquelle la partie mobile est éloignée de la partie fixe,
- dispositif dans lequel l'élément monté en translation comprend une tige montée dans un logement de guidage,
- dispositif dans lequel le logement de guidage est formé dans la face arrière de la partie fixe,
- dispositif dans lequel l'élément monté en translation comporte une partie longitudinale orientée suivant la direction de translation et une partie transversale sur laquelle est situé l'axe (B) de rotation de la partie mobile,
- dispositif dans lequel la liaison du type pivot glissant est située entre l'axe (B) de rotation de la partie mobile et l'axe (A) de rotation du levier,
- dispositif dans lequel la liaison du type pivot glissant comporte un trou oblong formé dans le levier coopérant avec un axe d'entraînement (C) sur lequel la partie mobile est montée en rotation,
- dispositif dans lequel la face arrière de la partie fixe comporte une surface de butée pour limiter la rotation de la partie mobile,
- dispositif dans lequel la partie mobile comporte au moins un réceptacle de conditionnement d'une substance à infuser et la base du réceptacle comporte une ouverture permettant le passage d'un poussoir dans le volume du réceptacle pour amorcer l'extraction du conditionnement après usage,
- dispositif dans lequel le poussoir est formé sur le levier de sorte à passer dans le volume du réceptacle en fin de rotation de la partie mobile,
- dispositif dans lequel la partie fixe comporte un corps doté d'une tête d'injection d'eau chaude dans un conditionnement de substance à infuser, la tête étant mobile et apte à s'appliquer ou à percer un embout formé sur le conditionnement et la surface inférieure du corps étant apte à s'appliquer sur la face supérieure du conditionnement autour de l'embout,
- dispositif dans lequel le corps est entouré d'une couronne s'appliquant élastiquement sur la face supérieure d'un réceptacle recevant un conditionnement dans la partie mobile,
- dispositif dans lequel le débattement en rotation de la partie mobile est compris entre 45° et 90°.
- dispositif dans lequel le débattement en rotation de la partie mobile est supérieur à 90°.

La présente invention concerne également une machine pour la fabrication de boissons incorporant un dispositif selon l'invention.

Les dessins ci-joints sont donnés à titre d'exemples et ne sont pas limitatifs de l'invention. Ils représentent seulement un mode de réalisation de l'invention et permettront de la comprendre aisément.
Les figures 1 à 3 montrent un exemple de dispositif de l'invention en vue de face en trois positions successives respectivement fermée, intermédiaire et ouverte.
Les figures 4 à 6 illustrent le dispositif de l'invention suivant les lignes de coupe AA des figures 1 à 3 respectivement.
La figure 7 est une vue en coupe de l'invention en position intermédiaire en phase de translation verticale.
La figure 8 est une vue en perspective du dispositif ouvert.
La figure 9 montre la coopération du dispositif d'extraction avec un conditionnement de café moulu en position fermée ; la figure 10 en est une vue de détail au niveau de la partie d'injection d'eau.
La figure 11 illustre cette coopération en position ouverte et la figure 12 en est une vue de détail.

Le dispositif de l'invention est incorporé dans une machine convenant particulièrement pour la fabrication de boissons au café obtenues à partir d'infusion d'une substance du type mouture de café. A cet effet, le dispositif est rapporté sur le châssis 3 de la machine par tout moyen courant de sorte à recevoir de l'eau chaude sous pression obtenue classiquement par l'intermédiaire d'une chaudière et d'une pompe.

Le dispositif d'extraction ici présenté comporte une chambre d'infusion que l'on définit ici comme le volume apte à recevoir la mouture de café conditionnée ou non et au niveau duquel s'effectue la phase d'injection d'eau chaude au travers de la mouture.

Pour permettre l'admission, l'infusion et l'éjection de la mouture, la chambre d'infusion est réalisée dans une partie fixe 1 et dans une partie mobile 2. La partie mobile 2 permet d'opérer les phases successives de fonctionnement.

On notera que les figures annexées à la présente description se réfèrent à un mode de réalisation utilisant des conditionnements 6 de mouture de café. Dans la description qui suit, on se référera uniquement à cet exemple cependant non limitatif étant entendu que le dispositif peut également fonctionner avec de la mouture non emballée reçue dans une coupelle filtre manipulable.

Par ailleurs, l'exemple illustré comporte deux chambres d'infusion aptes à fonctionner avec deux conditionnements 6 simultanément ou séparément. Cet exemple n'est cependant pas limitatif et le dispositif de l'invention peut s'appliquer à un système utilisant un seul conditionnement 6.

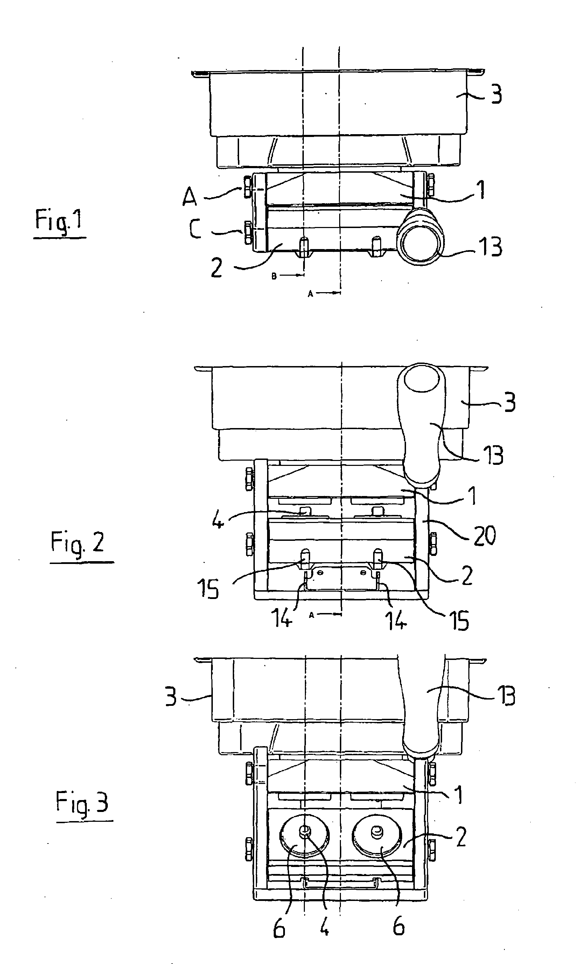

Dans le cas représenté aux figures 1 à 3, l'entraînement de la partie mobile 2 est opéré par l'intermédiaire d'un levier 20 doté d'une poignée 13 pour l'actionnement par l'opérateur ainsi que d'un système en étrier apte à encadrer la partie mobile 2. Le levier 20 est lui-même monté en rotation par rapport au châssis 3 de la machine autour d'un axe A.

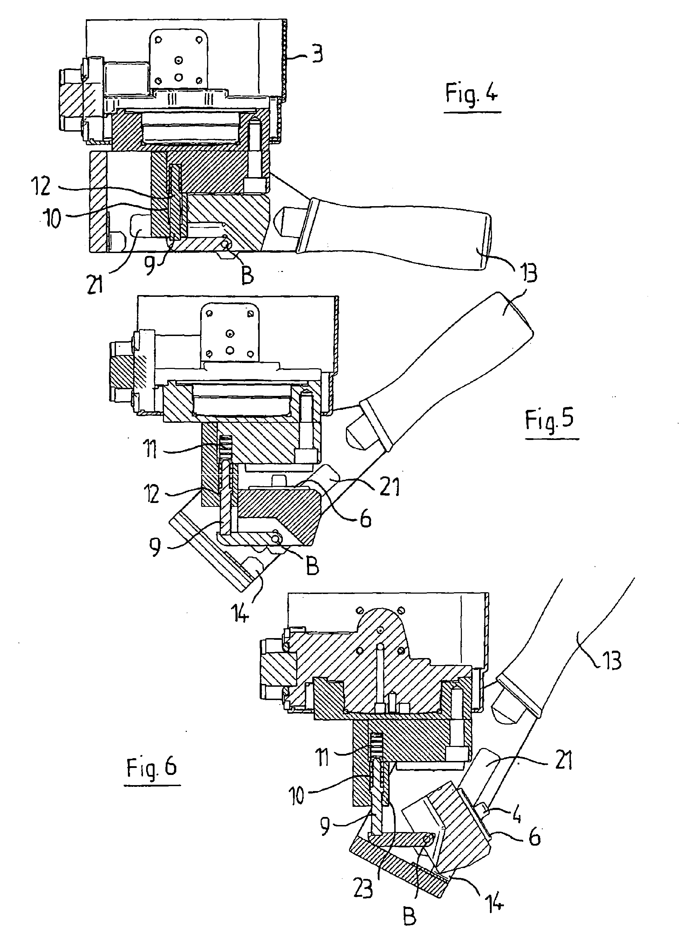

On voit plus précisément le mode d'entraînement de la partie mobile 2 aux figures 4 à 6.

A ces figures, on a représenté un axe B de rotation de la partie mobile 2 par rapport au châssis 3 et à la partie fixe 1. Parallèlement, une liaison pivot glissant est formée entre le levier 20 et la partie mobile 2 de sorte à produire l'entraînement. On entend par liaison du type pivot glissant une liaison cinématique permettant une rotation de la partie mobile autour d'un axe lui-même apte à une translation relativement au levier 20.

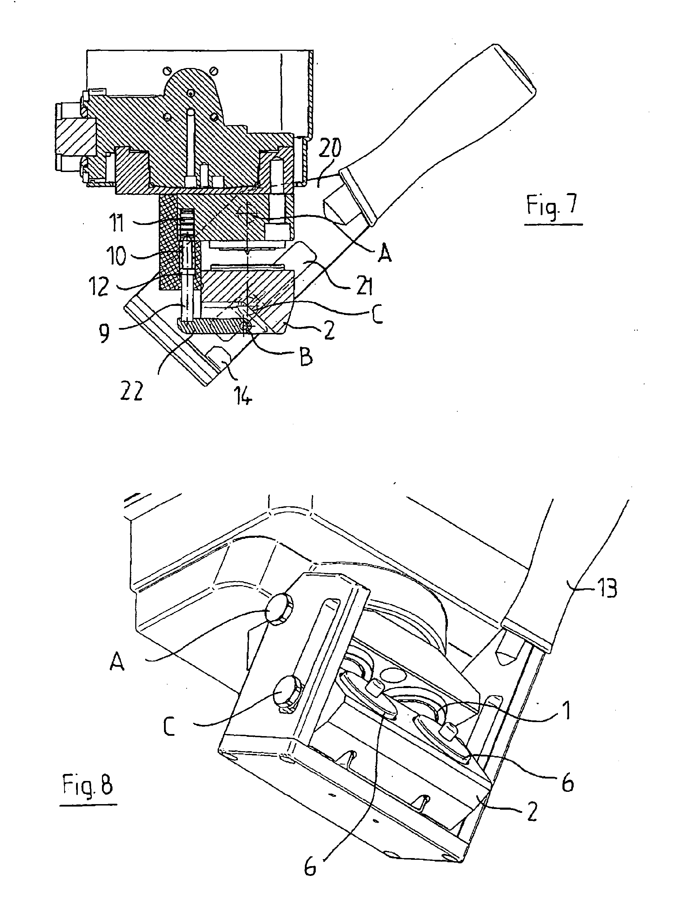

Dans le cas illustré, la liaison pivot glissant est réalisée par une paire de trous oblong 21 formés sur deux portions latérales du levier 20 en forme d'étrier de sorte à coopérer avec un axe C sur lequel la partie mobile 2 est montée en rotation. La figure 7 illustre précisément les trois mobilités en rotation du dispositif de l'invention à savoir celle du levier 20 relativement à l'axe A, celle de la partie mobile 2 relativement à l'axe B et de la partie mobile 2 relativement à l'axe C.

Selon l'invention, l'axe B est formé sur un élément translatif 9 monté en translation relativement à la partie fixe 1.

Cette mobilité en translation permet d'approcher ou d'éloigner la partie mobile 2 de la partie fixe 1. L'accostage des deux parties fixe 1 et mobile 2 s'effectue alors uniquement en translation ce qui est plus favorable à l'étanchéité et à l'absence de frottement entre les deux parties. En outre, la possibilité d'éloigner plus fortement la partie mobile de la partie fixe assure une plus grande accessibilité à la partie mobile 2 en particulier en phase de chargement et de déchargement des conditionnements 6.

A titre d'exemple préféré, on a représenté en particulier aux figures 4 à 7 un élément translatif 9 sous la forme d'une tige dotée d'une portion verticale et montée en translation dans un logement de guidage 10 à l'encontre d'un ressort 11 apte à rappeler par défaut la tige 9 en position éloignée relativement à la partie fixe 1.

L'élément 9 comporte également avantageusement une partie longitudinale 22 s'étendant depuis la partie arrière de la partie fixe 1 vers la partie de façade sensiblement au niveau de la face inférieure de la partie mobile 2. C'est avantageusement à proximité de la partie longitudinale 22 qu'est positionné l'axe de rotation B.

L'axe B est très légèrement décalé vers l'arrière par rapport à l'axe C de sorte que la rotation du levier 20 génère, en phase finale, la rotation de la partie mobile 2. Le placement à proximité des axes B et C assure un grand débattement angulaire qui peut être soit compris entre 0 et 90° particulièrement si un déchargement manuel est souhaité soit de plus de 90° si on souhaite une éjection par gravité.

Toujours en référence aux figures 4 à 7, l'élément 9 et le logement de guidage 10 sont formés au niveau de la face arrière de la partie fixe 1. A ce niveau, une surface de butée 23 est apte à coopérer avec la partie mobile 2 de sorte à limiter son mouvement de rotation particulièrement en phase de remontée de la partie mobile 2 vers la partie fixe 1.

La partie mobile 2 comporte au moins un réceptacle 5 définissant un volume intérieur accueillant un conditionnement 6. Le réceptacle 5 comporte une ouverture dans sa partie inférieure pour constituer une zone d'évacuation 8 de boisson.

La forme et les dimensions du réceptacle 5 sont adaptées aux formes et dimensions des conditionnements 6 à recevoir.

Pour faciliter l'extraction des conditionnements 6 en phase d'ouverture de la chambre d'infusion, le dispositif comporte, suivant un mode préféré de réalisation de l'invention, un poussoir 14 apte à s'introduire dans le volume intérieur du réceptacle 5 en fin de rotation de la partie mobile 2 de sorte à s'appliquer à proximité de la partie inférieure du conditionnement 6 pour le soulever légèrement ou complètement en dehors du volume du réceptacle 5.

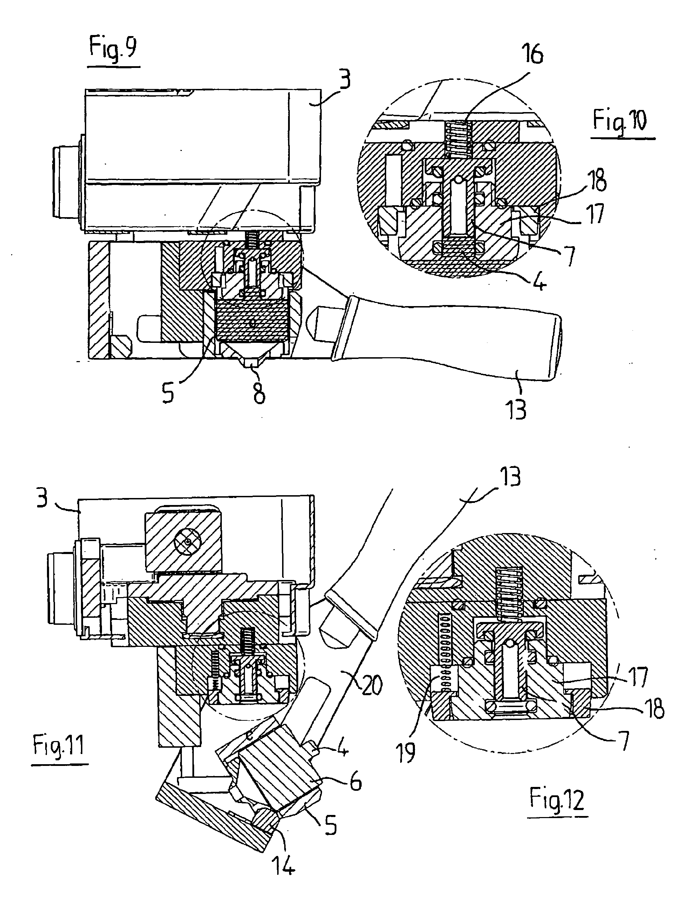

Un exemple de poussoir 14 est donné en figure 11 en phase de déchargement du conditionnement 6.

Dans le cas représenté, le poussoir 14 est formé sur le levier 20, sensiblement vers la face arrière du dispositif, le débattement angulaire de la partie mobile 2 étant choisi pour que le poussoir 14 s'introduise dans le volume intérieur du réceptacle 5 en fin de rotation.

On a également illustré aux figures 9 à 12 un exemple de coopération entre le conditionnement 6 et la partie d'injection d'eau chaude du dispositif.

Ainsi, en figure 9, le conditionnement 6 comporte un embout 4 par lequel est introduite l'eau chaude dans le conditionnement 6, avec ou sans percement préalable de l'embout 4. On a également illustré un corps d'injection 17 dans lequel un trou central permet une mobilité en translation d'une tête d'injection apte à s'appliquer sur la face supérieure de l'embout 4, le corps d'injection 17 lui-même s'appliquant sur la face supérieure du conditionnement 6 situé autour de l'embout 4. Le conditionnement 6 est donc particulièrement bien immobilisé et l'étanchéité peut être réalisée par un joint par exemple torique formé entre le corps 17 et une portion cylindrique de la surface latérale de l'embout 4.

Par ailleurs, le corps 17 est entouré d'une couronne 18 apte à s'appliquer sur la face supérieure du réceptacle 5. La couronne 18 est mobile en translation verticale à l'encontre de moyens de rappel du type ressort 19.

Lorsque le dispositif est en position fermé, la configuration représentée à la figure 10 est atteinte. A ce stade, l'embout 4 opère la translation verticale de la tête d'injection 7 entraînant l'ouverture du circuit d'injection d'eau chaude passant dans la tête d'injection 7. Simultanément, le corps 17 s'applique autour de l'embout 4 de sorte à le maintenir et assurer l'étanchéité. La couronne 18 est quant à elle en position rétractée du fait de l'appui du pourtour du réceptacle 5.

La figure 11 montre une position ouverte du dispositif et la figure 12 illustre plus précisément la position de repos de la partie d'injection d'eau chaude du dispositif.

Dans cette configuration, la tête d'injection 7 est déployée dans le corps 17 et plaquée contre celui-ci à l'encontre d'un ressort 16. Le passage d'eau chaude n'est plus possible dans cette configuration.

Dans le même temps, la couronne 18 est également en position déployée.

On explique ci-après un exemple de fonctionnement d'une machine incorporant le dispositif de l'invention.

Dans une première étape, le levier 20 est positionné, par l'intermédiaire de la poignée 13, dans une configuration similaire à celle représentée par exemple à la figure 8 pour l'admission d'un ou plusieurs conditionnements 6 dans la partie mobile 2. Le débattement angulaire de la partie mobile 2 conjugué à la translation verticale assure une grande accessibilité de l'ouverture des réceptacles 5 pour l'introduction des conditionnements 6.

L'opérateur exerce ensuite une rotation sur le levier 20 lequel pivote relativement à l'axe A.

Par l'intermédiaire de la liaison pivot glissant, la partie mobile 2 est amenée à pivoter relativement a l'axe B jusqu'à parvenir en position droite en application sur la surface de butée 23.

Le mouvement de pivot exercé par l'utilisateur sur le levier 20 se poursuivant, la partie mobile 2 entame alors, par l'intermédiaire de l'élément 9, un mouvement de translation verticale jusqu'à accoster la partie fixe 1.

On atteint, via la position de la figure 5, la position de la figure 4.

A ce stade, le circuit d'injection d'eau chaude a été ouvert par le déplacement de la tête 7 agissant tel un clapet dans le corps 17 tel que représenté en figure 10.

L'actionnement de la machine permet alors de produire l'entrée d'eau chaude dans le conditionnement 6. Eventuellement, l'embout 4 pourrait être préalablement percé par un organe adéquat formé sur la tête d'injection 7.

La boisson est évacuée par l'intermédiaire de la zone 8.

L'opérateur peut alors produire une rotation inverse sur le levier 20 de sorte à amener la partie mobile 2 jusqu'à la position d'ouverture.

Ce faisant, le levier 20 produit d'abord une descente de l'élément 9 correspondant à la position illustrée aux figures 2, 5 et 7.

Le ressort 11 sera d'une raideur adaptée à faciliter cette étape de descente.

A titre préféré, le ressort 11 permet aussi de favoriser la translation en phase de descente de sorte à ne produire la rotation de la partie mobile 2 qu'en fin de course.

Une fois la descente opérée, l'élément 9 vient er butée, par un épaulement 12 à l'extrémité du logement de guidage 10. La translation s'arrête et la mise en rotation de la partie mobile 2 autour de l'axe B se produit jusqu'à atteindre le débattement angulaire maximal orientant la partie mobile 2 vers la face avant de la machine pour permettre à l'opérateur l'accéder au conditionnement 6.

Le poussoir 14 permet d'amorcer le déchargement du conditionnement 6 de sorte à faciliter la manipulation par l'opérateur. Dans une alternative, le débattement angulaire de la partie mobile 2 est tel que le conditionnement 6 est déchargé par simple gravité.

### REFERENCES

1. Partie fixe
2. Partie mobile
3. Châssis
4. Embout
5. Réceptacle
6. Conditionnement
7. Tête d'injection
8. Zone d'évacuation de boisson
9. Elément monté en translation
10. Logement de guidage
11. Ressort
12. Epaulement
13. Poignée
14. Poussoir
15.Ouverture
16. Ressort
17. Corps d'injection
18. Couronne
19. Ressort
20. Levier
21. Trou oblong
22. Partie longitudinale
23. Surface de butée

## Revendications

1. Dispositif d'extraction d'une substance pour la production de boissons par infusion comportant :
- une chambre d'infusion formée d'une partie fixe (1) et d'une partie mobile (2) de sorte à ouvrir et fermer la chambre d'infusion,
- un levier (20) monté en rotation relativement à un axe (A) et apte à entraîner la partie mobile (2) en rotation relativement à un axe (B) par l'intermédiaire d'une liaison du type pivot glissant entre le levier (20) et la partie mobile (2),
**caractérisé par le fait**
**que** l'axe (B) de rotation de la partie mobile (2) est situé sur un élément monté en translation (9) relativement à la partie fixe (1) pour approcher ou éloigner la partie mobile (2) de la partie fixe (1).

2. Dispositif selon la revendication 1 comportant des moyens élastiques de poussée de l'élément monté en translation (9) vers une position dans laquelle la partie mobile (2) est éloignée de la partie fixe (1).

3. Dispositif selon la revendication 1 ou 2 dans lequel l'élément monté en translation (9) comprend une tige montée dans un logement de guidage (10).

4. Dispositif selon la revendication 3 dans lequel le logement de guidage (10) est formé dans la face arrière de la partie fixe (1).

5. Dispositif selon les revendications 1 à 4 dans lequel l'élément monté en translation (9) comporte une partie longitudinale (22) orientée suivant la direction de translation et une partie transversale sur laquelle est situé l'axe (B) de rotation de la partie mobile (2).

6. Dispositif selon les revendications 1 à 5 dans lequel la liaison du type pivot glissant est située entre l'axe (B) de rotation de la partie mobile (2) et l'axe (A) de rotation du levier (20).

7. Dispositif selon les revendications 1 à 6 dans lequel la liaison du type pivot glissant comporte un trou oblong (21) formé dans le levier (20) coopérant avec un axe d'entraînement (C) sur lequel la partie mobile (2) est montée en rotation.

8. Dispositif selon les revendications 1 à 7 dans lequel la face arrière de la partie fixe (1) comporte une surface de butée (23) pour limiter la rotation de la partie mobile (2).

9. Dispositif selon les revendications 1 à 8 dans lequel la partie mobile (2) comporte au moins un réceptacle (5) de conditionnement (6) d'une substance à infuser et que la base du réceptacle (5) comporte une ouverture permettant le passage d'un poussoir (14) dans le volume du réceptacle (5) pour amorcer l'extraction du conditionnement (6) après usage.

10. Dispositif selon la revendication 9 dans lequel le poussoir (14) est formé sur le levier (20) de sorte à passer dans le volume du réceptacle (5) en fin de rotation de la partie mobile (2).

11. Dispositif selon les revendications 1 à 10 dans lequel la partie fixe (1) comporte un corps doté d'une tête d'injection (7) d'eau chaude dans un conditionnement (6) de substance à infuser, la tête étant mobile pour ouvrir ou fermer le circuit d'injection d'eau chaude et apte à s'appliquer ou à percer un embout (4) formé sur le conditionnement (6) et la surface inférieure du corps étant apte à s'appliquer sur la face supérieure du conditionnement (6) autour de l'embout (4).

12. Dispositif selon la revendication 11 dans lequel le corps est entouré d'une couronne (18) s'appliquant élastiquement sur la face supérieure d'un réceptacle (5) recevant un conditionnement (6) dans la partie mobile (2).

13. Dispositif selon les revendications 1 à 12 dans lequel le débattement en rotation de la partie mobile (2) est compris entre 45° et 90°.

14. Dispositif selon les revendications 1 à 12 dans lequel le débattement en rotation de la partie mobile (2) est supérieur à 90°.

15. Machine pour la fabrication de boissons incorporant un dispositif selon l'une des revendications 1 à 14.

## Claims

1. Device for the extraction of a substance to make beverages by infusion comprising:
- an infusion chamber consisting of a fixed part (1) and a moving part (2) that co-act to open and close the infusion chamber,
- a lever (20) rotatably mounted relative to axle A and capable of driving moving part (2) rotatably relative to axle (B) through the action of a linkage of the sliding pivot type between lever (20) and moving part (2),
**characterised in that** rotational axle (B) of moving part (2) is situated on an element (9) translationally assembled relative to fixed part (1) in order to bring together or move apart moving part (2) from fixed part (1).

2. Device according to claim 1 comprising elastic means for pushing the translationally assembled element (9) towards a position in which moving part (2) is moved away from fixed part (1).

3. Device according to claim 1 or 2 in which translationally assembled element (9) has a rod fitted in a guiding-housing (10).

4. Device according to claim 3 in which housing (10) is formed in the rear face of fixed part 1.

5. Device according to claims 1 to 4 in which the element assembled in translation (9) comprises a longitudinal part (22) oriented according to the direction of translation and a transversal part on which is located rotational axle (B) of moving part (2).

6. Device according to claims 1 to 5 in which the sliding pivot-type linkage is situated between rotational axle (B) of moving part (2) and rotational axle (A) of lever (20).

7. Device according to claims 1 to 6 in which sliding pivot-type linkage is equipped with an oblong hole (21) formed in lever (20) which co-acts with drive axle (C) on which moving part (2) is rotatably mounted.

8. Device according to claims 1 to 7 in which the rear face of fixed part (1) has a stop (23) that limits the rotation of moving part (2).

9. Device according to claims 1 to 8 in which moving part (2) has at least one receptacle (5) for packages (6) of a substance to be infused and that the base of receptacle (5) has an opening to allow a pusher (14) to pass into the volume of receptacle (5) to begin the extraction of package (6) after use.

10. Device according to claim 9 in which pusher (14) is formed on lever (20) so as to pass into receptacle (5) at the end of rotation of moving part (2).

11. Device according to claims 1 to 10 in which fixed part (1) consists of a body equipped with a head (7) injecting hot water into a package (6) of a substance to be infused, the head moving to open or close the hot water injection circuit and able to apply on or piercing an end-piece (4) formed on package (6) and the underside of the body applying on the upper surface of package (6) around end-piece (4).

12. Device according to claim 11 in which a body is surrounded by a crown (18) applying elastically on the upper face of a receptacle (5) receiving package (6) in moving part (2).

13. Device according to claims 1 to 12 in which rotational movement of moving part (2) is between 45° and 90°.

14. Device according to claims 1 to 12 in which the rotational movement of moving part (2) is greater than 90°.

15. Machine for making beverages incorporating a device according to one of the claims 1 to 14.

## Patentansprüche

1. Vorrichtung zum Extrahieren einer Substanz zur Herstellung von Getränken durch Brühen bestehend aus:
einer Brühkammer mit einem festen Teil (1) und einem beweglichen Teil (2), so dass die Brühkammer geöffnet und geschlossen werden kann,
einem Hebel (20), der drehbar um die Achse (A) gelagert ist und den beweglichen Teil (2), mittels einer gleitenden Schwenk-Schiebeverbindung zwischen dem Hebel (20) und dem beweglichen Teil (2), diesen beweglichen Teil (2) um die Achse (B) drehen kann, **gekennzeichnet dadurch, dass** die Drehachse (B) des beweglichen Teils (2) auf einem relativ zum festen Teil (1) translatorisch bewegten Element (9) angeordnet ist, derart, dass der bewegliche Teil (2) dem festen Teil (1) angenähert oder von ihm entfernt werden kann.

2. Vorrichtung gemäß Patentanspruch 1 mit elastischen Elementen, die das translatorisch gelagerte Element (9) in eine Position drücken, in der der bewegliche Teil (2) vom festen Teil (1) entfernt ist.

3. Vorrichtung gemäß Patentanspruch 1 oder 2, bei welcher das translatorisch angeordnete Element (9) eine Stange besitzt, die von einer Führung (10) aufgenommen wird.

4. Vorrichtung gemäß Patentanspruch 3, bei welchem die als Führung dienende Aufnahme (10) in der Rückseite des festen Teils (1) ausgebildet ist.

5. Vorrichtung gemäß Patentanspruch 1 bis 4, bei welcher das translatorisch angeordnete Element (9) einen in Translationsrichtung gerichteten Längsteil (22) und einen querliegenden Teil besitzt, auf dem die Drehachse (B) des beweglichen Teils (2) liegt.

6. Vorrichtung gemäß Patentanspruch 1 bis 5, bei welcher die Schwenk-Schiebeverbindung zwischen der Drehachse (B) des beweglichen Teils (2) und der Drehachse (A) des Hebels (20) liegt.

7. Vorrichtung gemäß Patentanspruch 1 bis 6, bei welcher die Schwenk-Schiebeverbindung im Hebel (20) ein Langloch (21) aufweist, das mit einer Antriebsachse (C) zusammenwirkt, auf welcher der bewegliche Teil (2) drehbar gelagert montiert ist.

8. Vorrichtung gemäß Patentanspruch 1 bis 7, bei welcher die Rückseite des festen Teils (1) eine Anschlagfläche (23) besitzt, um die Drehung des beweglichen Teils (2) zu begrenzen.

9. Vorrichtung gemäß Patentanspruch 1 bis 8, bei welcher der bewegliche Teil (2) mindestens eine Aufnahme (5) für eine Portion (6) einer zu brühenden Substanz besitzt, und der Boden der Aufnahme (5) eine Öffnung besitzt, die ein Stößel (14) in den Innenraum der Aufnahme (5) passieren kann, um nach dem Gebrauch das Auswerfen der Portion (6) einzuleiten.

10. Vorrichtung gemäß Patentanspruch 9, bei welcher der Stößel (14) auf dem Hebel (20) derart ausgebildet ist, dass er am Ende der Drehung des beweglichen Teils (2) in den Innenraum der Aufnahme (5) eindringen kann.

11. Vorrichtung gemäß Patentanspruch 1 bis 10, bei welcher der feste Teil (1) einen Körper mit einem Sprühkopf (7) besitzt, um Warmwasser in eine Portion (6) mit der zu brühenden Substanz zu sprühen, wobei der Kopf beweglich ist und in der Lage ist, eine Warmwasserzufuhrleitung zu öffnen oder zu schließen und sich an einem, auf der Portion (6) ausgebildeten Endstück (4) anzulegen oder dieses zu durchstoßen, und bei der die Unterseite des Körpers sich an die Oberseite der Portion (6), um das Endstück (4) herum, anlegen kann.

12. Vorrichtung gemäß Patentanspruch 11, bei welcher der Körper mit einem Kranz (18) umgeben ist, der sich elastisch auf die Oberseite einer Aufnahme (5) für die Portion (6) im beweglichen Teil (2) anlegen kann.

13. Vorrichtung gemäß Patentanspruch 1 bis 12, bei welcher die Drehbewegung des beweglichen Teils (2) auf einen Winkel zwischen 45° und 90° begrenzt ist.

14. Vorrichtung gemäß Patentanspruch 1 bis 12, bei welcher die Drehbewegung des beweglichen Teils (2) über mehr als 90° erfolgt.

15. Maschine zur Herstellung von Getränken, die eine Vorrichtung gemäß einem der Patentansprüche 1 bis 14 enthält.
